# EUROPÄISCHE PATENTSCHRIFT

(11) **EP 3 098 048 B1**
(45) Veröffentlichungstag und Bekanntmachung des Hinweises auf die Patenterteilung: **28.02.2018**
(21) Anmeldenummer: 16170959.7
(22) Anmeldetag: 24.05.2016
(51) Int. Cl.: B29C 45/00, B65D 47/08

(54) **KLAPPVERSCHLUSS**
FLAP LOCK
CLAPET

(30) Priorität: 26.05.2015 DE 202015003783 U
(43) Veröffentlichungstag der Anmeldung: 30.11.2016
(73) Patentinhaber: Weener Plastik GmbH, 26826 Weener (DE)
(72) Erfinder: Schipper, Michael, 26826 Weener (DE)
(74) Vertreter: Wallinger, Michael

(56) Entgegenhaltungen:
- WO-A2-2006/045087
- CA-A- 1 121 310
- DE-A1- 4 219 598
- DE-U1- 20 304 496
- DE-U1-202009 000 138
- FR-A1- 2 633 590
- JP-A- 2013 184 727
- US-A- 4 220 248

## Beschreibung

Die Erfindung betrifft einen Klappverschluss für einen Behälter, insbesondere für flüssige, pastöse oder pulverförmige Produkte, vorzugsweise Getränke, Chemikalien, Medikamente, Reinigungsmittel oder Ähnliches. Die Erfindung betrifft ebenfalls eine Spritzgießmaschine zur Herstellung eines Klappverschlusses und ein Verfahren zur Herstellung eines Klappverschlusses. Die vorliegende Anmeldung nimmt die Priorität der am 26. Mai 2015 angemeldeten deutschen Gebrauchsmusteranmeldung DE 20 2015 003 783. Der Klappverschluss weist ein Verschlussunterteil und einen Klappdeckel auf, welche durch ein Scharnier drehbar verbunden sind.

Der Klappverschluss wird im Folgenden der Einfachheit halber in einem Zustand beschrieben, in dem er - wenn nicht anders angegeben - geschlossen ist und in einer horizontalen Orientierung auf dem oberen Ende eines Behälters montiert ist, wodurch sich das Verschlussunterteil unterhalb des Klappdeckels befindet. Dies stellt jedoch keine Einschränkung dar.
Weiterhin weisen das Verschlussunterteil einen nach oben hervorstehenden Entnahmedom mit einer Entnahmeöffnung für das Produkt und der Klappdeckel einen nach unten hervorstehenden Dichtzapfen auf, wobei der Dichtzapfen beim Schließen des Klappverschlusses in den Entnahmedom eindringt und diesen dichtend verschließt.
Bei derartigen Klappverschlüssen tritt oft das Problem auf, dass der Dichtzapfen sich beim Schließen des Klappdeckels nur relativ schwer, d. h. mit einem größeren Kraftaufwand, in den Entnahmedom einführen lässt, wenn er den Entnahmedom im geschlossenen Zustand des Klappverschlusses hinreichend gut abdichten soll. Dies ist insbesondere dann problematisch, wenn der Klappverschluss durch Spritzgießen aus Kunststoff gefertigt wird und bereits unmittelbar nach dem Spritzgießvorgang noch im Spritzgießwerkzeug geschlossen werden soll. Außerdem ist ein Klappverschluss gemäß dem Oberbegriff des Anspruchs 1 aus DE20304496U1 bekannt. Der vorliegenden Erfindung liegt die Aufgabe zu Grunde, einen Klappverschluss der genannten Art zu schaffen, bei dem der Schließvorgang erleichtert ist.
Die Aufgabe wird gelöst durch einen Klappverschluss gemäß Merkmal 1. Vorteilhafte Ausführungen der Erfindung sind in den Unteransprüchen enthalten.
Die Erfindung geht aus von einem Klappverschluss für einen Behälter, insbesondere für flüssige, pastöse oder pulverförmige Produkte, mit einem Verschlussunterteil zur Montage auf einer Entnahmeöffnung des Behälters und mit einem im geschlossenen Zustand des Klappverschlusses das Verschlussunterteil zumindest teilweise überdeckenden Klappdeckel.
Dabei weist das Verschlussunterteil auf seiner dem Behälter abgewandten Außenseite einen im geschlossenen Zustand des Klappverschlusses in Richtung des Klappdeckels hervorstehenden Entnahmedom mit einer Entnahmeöffnung und der Klappdeckel auf seiner inneren Deckelfläche einen im geschlossenen Zustand des Klappverschlusses in Richtung des Verschlussunterteils hervorstehenden Dichtzapfen auf.

Weiterhin sind das Verschlussunterteil und der Klappdeckel mittels wenigstens eines Scharniers derart um eine Drehachse drehbar miteinander verbunden, dass beim Schließen des Klappverschlusses der Dichtzapfen des Klappdeckels in den Entnahmedom des Verschlussunterteils eindringt und die Entnahmeöffnung dichtend verschließt und dass sich das Verschlussunterteil und der Klappdeckel auf dem größten Teil ihres außerhalb des Bereichs des Scharniers gelegenen Umfangs im Wesentlichen in einer Trennebene berühren.

Die Erfindung basiert auf der Erkenntnis, dass es für ein leichtes Einführen des Dichtzapfens in den Entnahmedom günstig ist, wenn der Dichtzapfen beim Schließen des Klappdeckels möglichst steil in den Entnahmedom eingeführt wird, d. h. wenn der Schließwinkel möglichst klein ist. Unter dem Schließwinkel wird hierbei der Winkel zwischen einer Mittelachse des Entnahmedoms und einer Mittelachse des Dichtzapfens zu dem Zeitpunkt verstanden, an dem sich der Entnahmedom und der Dichtzapfen beim Schließen des Klappverschlusses erstmals berühren.

Ist der Schließwinkel dagegen relativ groß, so neigen der Dichtzapfen und der Entnahmedom dazu, sich beim Einführen des Dichtzapfens in den Entnahmedom zu verkanten, wodurch die Reibung zwischen Dichtzapfen und Entnahmedom steigt und/oder sich insbesondere der Dichtzapfen beim Einführen stärker verformt, wodurch die zum Einführen erforderliche Kraft größer wird.

Die Erfindung sieht nun vor, dass die Drehachse des Scharniers gegenüber der Trennebene in Richtung des Klappdeckels hin versetzt ist.

Hierdurch wird der Schließwinkel gegenüber einem herkömmlichen Klappverschluss, bei dem die Drehachse des Scharniers üblicherweise in der Trennebene verläuft, verringert und somit das Einführen des Dichtzapfens in den Entnahmedom erleichtert.

In einer bevorzugten Ausführung der Erfindung ist das Scharnier ein Filmscharnier. Ein solches Scharnier lässt sich leicht herstellen, insbesondere einstückig mit dem Verschlussunterteil und/oder mit dem Klappdeckel durch Spritzgießen, und ist insbesondere im geschlossenen Zustand des Klappverschlusses nur wenig sichtbar. Erfindungemäss sind das Verschlussunterteil und der Klappdeckel ferner über wenigstens ein Spannband verbunden, und das wenigstens eine Spannband verdeckt im geschlossenen Zustand des Klappverschlusses wenigstens einen Übergangsbereich auf der äußeren Umfangsfläche des Klappverschlusses zwischen der Trennebene und einer in Umfangsrichtung gesehen äußeren Grenze des Scharniers.
Ein solches Spannband wird vorzugsweise dazu eingesetzt, um den Klappverschluss mit einer Schnappfunktion auszustatten, d. h. dass der Klappdeckel beim Öffnen ab einem bestimmten Öffnungswinkel selbsttätig in eine geöffnete Stellung "aufschnappt" und/oder beim Schließen ab einem bestimmten Öffnungswinkel selbsttätig in die geschlossene oder eine nahezu geschlossene Stellung "zuschnappt". Das Spannband ist vorzugsweise in Umfangsrichtung des Klappverschlusses unmittelbar neben dem Scharnier angeordnet und verbindet den Klappdeckel mit dem Verschlussunterteil.
Der Übergangsbereich resultiert aus dem Höhenunterschied zwischen der Trennebene und der Drehachse des Scharniers, welcher sich erfindungsgemäß ergibt, und ist optisch beispielsweise durch einen "Versprung" oder "Versatz" der äußeren Umfangslinie des Klappverschlusses im Bereich der Trennebene wahrnehmbar. Dass das Spannband den Übergangsbereich zwischen der Trennebene und dem erfindungsgemäß gegenüber der Trennebene in Richtung des Klappdeckels hin versetzten Scharnier verdeckt, verbessert den optischen Eindruck des Klappverschlusses insbesondere im geschlossenen Zustand.

In einer bevorzugten Variante dieser Ausführung der Erfindung sind das Verschlussunterteil und der Klappdeckel über zwei Spannbänder verbunden, und jedes Spannband verdeckt im geschlossenen Zustand des Klappverschlusses einen Übergangsbereich. Vorzugsweise sind die beiden Spannbänder auf beiden Seiten des Scharniers unmittelbar neben dem Scharnier angeordnet. Durch die Überdeckung der beiden Übergangsbereiche lässt sich erreichen, dass sich der Klappverschluss im geschlossenen Zustand optisch nicht oder nur kaum von einem herkömmlichen Klappverschluss, bei dem die Drehachse des Scharniers in der Trennebene verläuft, zu unterscheiden ist.

In einer weiteren bevorzugten Variante dieser Ausführung der Erfindung hat wenigstens ein Übergangsbereich in Umfangsrichtung gesehen die Form einer Stufe oder einer geraden oder gekrümmten Schräge. Die Form des Übergangsbereichs kann dabei je nach den konstruktiven und/oder gestalterischen Rahmenbedingungen für den Klappverschluss gewählt werden. So kann der Übergangsbereich bei einem Klappverschluss mit abgerundeten Außenkonturen vorzugsweise in Form einer gekrümmten Schräge, welche keine "Knicke" aufweist, gestaltet werden, um den optischen Gesamteindruck des Klappverschlusses, insbesondere im offenen Zustand, nur wenig zu stören.

In einer weiteren bevorzugten Ausführung der Erfindung beträgt der Abstand von der Trennebene zum Mittelpunkt der Drehachse des Scharniers wenigstens 10 %, vorzugsweise wenigstens 20 %, weiter vorzugsweise wenigstens 25 % des Abstandes von der Trennebene zur Entnahmeöffnung. Durch eine geeignete Wahl dieses Abstandes können die Position der Drehachse des Scharniers und die anderen konstruktiven Parameter, welche insgesamt den Schließwinkel bestimmen, insbesondere der Durchmesser des Klappverschlusses und eine etwaige Exzentrizität der Entnahmeöffnung, aufeinander abgestimmt werden.

Gegenstand der Erfindung ist weiterhin eine Spritzgießmaschine zur Herstellung eines erfindungsgemäßen Klappverschlusses, welche Mittel aufweist, um den Klappverschluss nach dem Spritzgießen und vor dem vollständigen Entnehmen aus dem Spritzgießwerkzeug zu schließen. Der Klappverschluss wird dabei vorzugsweise aus einem Kunststoffmaterial spritzgegossen.

Vorzugsweise handelt es sich hierbei um eine Spritzgießmaschine, in welcher der erfindungsgemäße Klappverschluss einstückig spritzgegossen wird. Eine andere bevorzugte Herstellung sieht vor, dass der Klappdeckel an das Verschlussunterteil oder das Verschlussunterteil an den Klappdeckel angespritzt wird, wobei dasjenige Teil, an das das andere Teil angespritzt wird, vorher separat spritzgegossen wurde und wobei vorzugsweise eines der beiden Teile einstückig mit dem Scharnier spritzgegossen wird.

Beim Schließen des Klappverschlusses befindet sich vorzugsweise das Verschlussunterteil noch in seiner Spritzgießform oder -formhälfte, während die Spritzgießform oder -formhälfte des Klappdeckels bereits entfernt wurde.

Die Mittel zum Schließen des Klappverschlusses bestehen vorzugsweise aus einer mechanischen Einrichtung, welche durch einen Druck auf den Klappdeckel bewirken, dass dieser sich um die Drehachse des Scharniers in Richtung des Verschlussunterteils dreht und dadurch der Klappverschluss geschlossen wird.

Dieser Vorgang kann jedoch auch mit vertauschten Rollen des Verschlussunterteils und des Klappdeckels ablaufen, d. h. das Verschlussunterteil wird durch die Mittel zum Schließen in Richtung des Klappdeckels gedreht und dadurch der Klappverschluss geschlossen.

Weitere Ausgestaltungen und Vorteile der Erfindung gehen aus der folgenden Beschreibung in Verbindung mit den Zeichnungen hervor. Dabei zeigen:
- Fig. 1:: einen Klappverschluss aus dem Stand der Technik im geöffneten Zustand in einer Seitenansicht, einer perspektivischen Ansicht und einer Schnittdarstellung;
- Fig. 2:: einen erfindungsgemäßen Klappverschluss im geöffneten Zustand in einer Seitenansicht und in einer perspektivischen Ansicht sowie im geschlossenen Zustand in einer perspektivischen Ansicht und einer Seitenansicht.

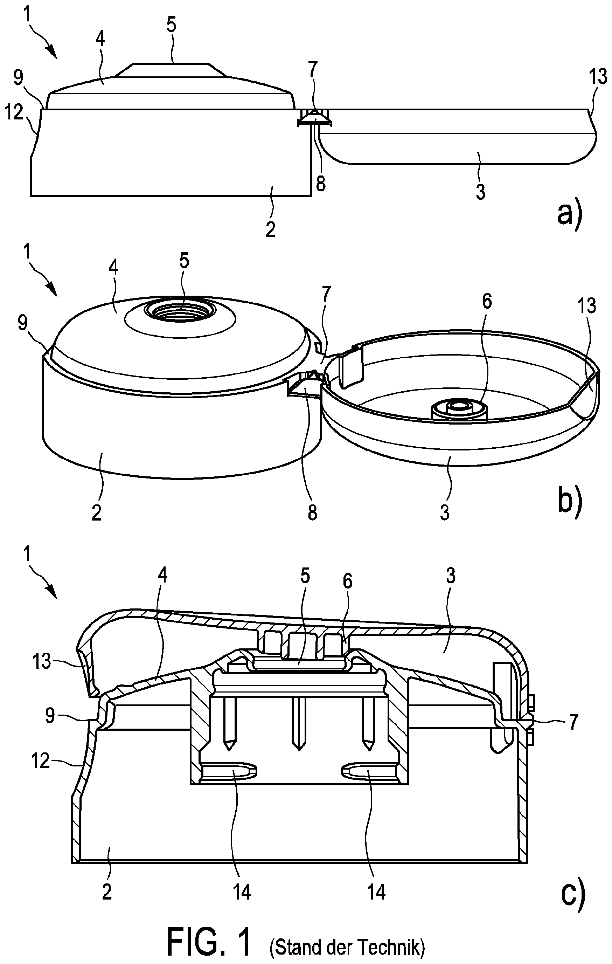

Fig. 1 zeigt einen Klappverschluss 1 aus dem Stand der Technik, und zwar a) in einer Seitenansicht im Herstellungszustand (vollständig geöffnet), b) in einer perspektivischen Ansicht im Herstellungszustand und c) in einem vertikalen Schnitt im nahezu geschlossenen Zustand.

Der Klappverschluss 1 weist ein Verschlussunterteil 2 und einen Klappdeckel 3 auf, welche durch ein Scharnier 7, vorzugsweise ein Filmscharnier, miteinander verbunden sind, wobei das Scharnier 7 durch zwei in Umfangsrichtung gesehen links und rechts des Scharniers 7 angeordnete Spannbänder 8 mit einer Schnappfunktion ausgestattet ist.

Die Drehachse des Scharniers 7 liegt in der Trennebene 9, in welcher sich das Verschlussunterteil 2 und der Klappdeckel 3 im geschlossenen Zustand des Klappverschlusses 1 berühren. Insbesondere in der Seitenansicht in Fig. 1 a) ist die Trennebene 9 als waagerechte Linie gut zu erkennen.

Weiterhin weist das Verschlussunterteil 2 eine Griffmulde 12 und der Klappdeckel 3 eine Griffmulde 13 auf, in welche im geschlossenen Zustand des Klappverschlusses 1 ein Finger, vorzugsweise ein Daumen, gelegt werden kann, wodurch das Hochdrücken des Klappdeckels 3 und damit das Öffnen des Klappverschlusses 1 erleichtert wird.

Das Verschlussunterteil 2 weist weiterhin an seiner Oberseite einen Entnahmedom 4 auf, welcher sich über die Trennebene erhebt und an dessen oberem Ende in der Mitte sich die Entnahmeöffnung 5 befindet. Der Klappdeckel 3 weist an seiner Innenseite einen Dichtzapfen 6 auf, welcher beim Schließen des Klappdeckels 3 in die Entnahmeöffnung 5 eindringt und diese dichtend verschließt.

Der Klappverschluss 1 ist dafür vorgesehen, mittels Aufprellelementen 14 auf einen entsprechenden Wulst auf dem Hals eines Behälters (nicht dargestellt) aufgeprellt zu werden.

Beim Schließen des Klappdeckels 3 haben die Mittelachse der Entnahmeöffnung 5, welche vertikal verläuft, und die Mittelachse des Dichtzapfens 6 zu dem Zeitpunkt, an dem der Dichtzapfen 6 den Entnahmedom 4 erstmals berührt, einen relativ großen Winkel zueinander.

Der Zustand des Klappverschlusses 1 zu diesem Zeitpunkt ist in Fig. 1 c) dargestellt. Man erkennt in der Schnittdarstellung, dass der rechte Rand des Dichtzapfens 6 bereits den Entnahmedom 4 am rechten Rand der Entnahmeöffnung 5 berührt, während der linke Rand des Dichtzapfens 6 den Entnahmedom 4 am linken Rand der Entnahmeöffnung 5 noch nicht berührt. Durch den genannten, relativ großen Winkel kann sich der Dichtzapfen 6 in der Entnahmeöffnung 5 verkanten, was das Schließen des Klappdeckels 3 erschwert.

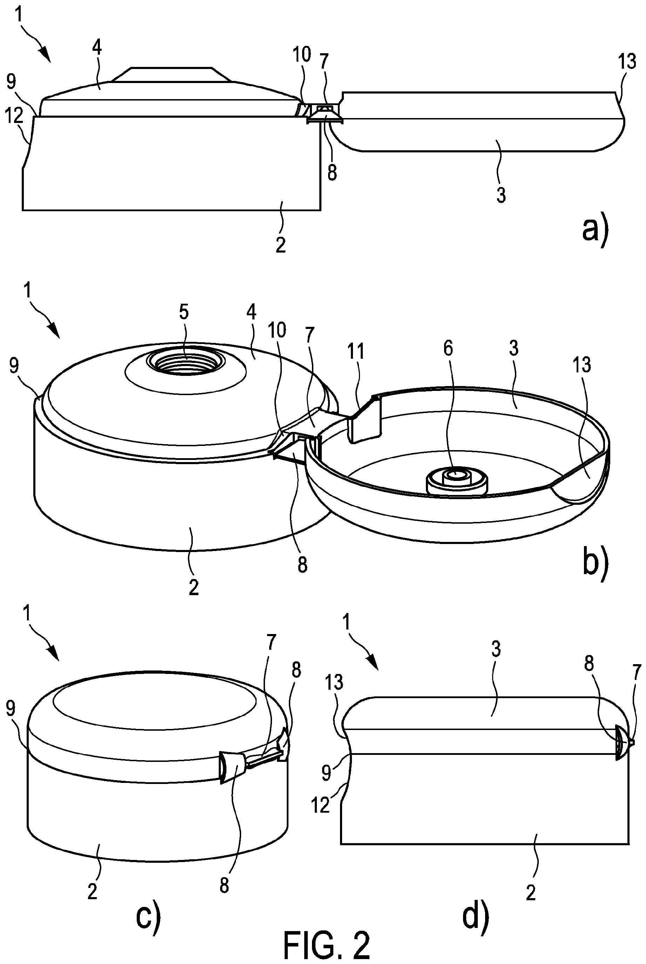

Fig. 2 zeigt den erfindungsgemäßen Klappverschluss 1 ebenfalls a) in einer Seitenansicht im Herstellungszustand (vollständig geöffnet) und b) in einer perspektivischen Ansicht im Herstellungszustand sowie zusätzlich c) in einer perspektivischen Ansicht von schräg hinten im geschlossenen Zustand und d) in einer Seitenansicht im geschlossenen Zustand.

Soweit die Elemente des erfindungsgemäßen Klappverschlusses gemäß Fig. 2 mit denjenigen des Klappverschlusses aus dem Stand der Technik gemäß Fig. 1 übereinstimmen, wurden auch die gleichen Bezugszeichen verwendet. Die gemeinsamen Elemente der in Fig. 1 und 2 dargestellten Klappverschlüsse werden hier nicht noch einmal beschrieben.

In dem erfindungsgemäßen Klappverschluss 1 gemäß Fig. 2 ist die Drehachse des Scharniers 7 gegenüber der Trennebene 9 nach oben hin, d. h. in Richtung der Entnahmeöffnung 5, versetzt. Dadurch wird der Winkel zwischen der vertikalen Mittelachse der Entnahmeöffnung 5 und der Mittelachse des Dichtzapfens 6 zum Zeitpunkt der ersten Berührung zwischen Dichtzapfen 6 und Entnahmedom 4 beim Schließen des Klappdeckels 3 verringert und somit das Schließen erleichtert.

Durch das Versetzen der Drehachse des Scharniers 7 aus der Trennebene 9 nach oben hin entsteht zwischen der Trennebene 9 und dem Scharnier 7 auf dem Umfang des Verschlussunterteils 2 auf beiden Seiten des Scharniers 7 jeweils ein vertikaler Versprung 10. Entsprechend entsteht an dem Rand des Klappdeckels 3, an dem das Scharnier befestigt ist, auf beiden Seiten des Scharniers 7 jeweils ein (im geschlossenen Zustand des Klappverschlusses 1) vertikaler Versprung 11. Jeweils ein Versprung 10 am Verschlussunterteil 2 und ein Versprung 11 am Klappdeckel 3 ist besonders in Fig. 2 b) gut zu erkennen.

Vorzugsweise haben die Versprünge 10 und 11 eine zueinander komplementäre Form, damit im geschlossenen Zustand der Klappverschlusses 1 einerseits das Verschlussunterteil 2 und der Klappdeckel 3 nicht miteinander kollidieren und sich andererseits zwischen dem Verschlussunterteil 2 und dem Klappdeckel 3 eine geschlossene umlaufende Berührungslinie ohne Fugen ergibt.

In Fig. 2 c) ist zu sehen, dass die Versprünge 10 und 11 am Verschlussunterteil 2 bzw. am Klappdeckel 3 im geschlossenen Zustand des Klappverschlusses 1 praktisch vollständig von den Spannbändern 8 verdeckt werden und somit für den Benutzer nahezu unsichtbar sind. Der einzige im geschlossenen Zustand des erfindungsgemäßen Klappverschlusses 1 sichtbare Unterschied gegenüber einem Klappverschluss aus dem Stand der Technik besteht darin, dass die Spannbänder 8 und das Scharnier 7 in vertikaler Richtung nicht mehr symmetrisch zur Trennebene 9 angeordnet sind, was jedoch den optischen Eindruck des Klappverschlusses 1 höchstens geringfügig beeinträchtigt.

### Bezugszeichenliste

- 1: Klappverschluss
- 2: Verschlussunterteil
- 3: Klappdeckel
- 4: Entnahmedom
- 5: Entnahmeöffnung
- 6: Dichtzapfen
- 7: Scharnier
- 8: Spannband
- 9: Trennebene
- 10: Versprung am Verschlussunterteil
- 11: Versprung am Klappdeckel
- 12: Griffmulde am Verschlussunterteil
- 13: Griffmulde am Klappdeckel
- 14: Aufprellelement

## Patentansprüche

1. Klappverschluss (1) für einen Behälter, insbesondere für flüssige, pastöse oder pulverförmige Produkte, mit einem Verschlussunterteil (2) zur Montage auf einer Entnahmeöffnung des Behälters und mit einem im geschlossenen Zustand des Klappverschlusses (1) das Verschlussunterteil (2) zumindest teilweise überdeckenden Klappdeckel (3),
wobei das Verschlussunterteil (2) auf seiner dem Behälter abgewandten Außenseite einen im geschlossenen Zustand des Klappverschlusses (1) in Richtung des Klappdeckels (3) hervorstehenden Entnahmedom (4) mit einer Entnahmeöffnung (5) und der Klappdeckel (3) auf seiner inneren Deckelfläche einen im geschlossenen Zustand des Klappverschlusses (1) in Richtung des Verschlussunterteils (2) hervorstehenden Dichtzapfen (6) aufweist,
wobei das Verschlussunterteil (2) und der Klappdeckel (3) mittels wenigstens eines Scharniers (7) derart um eine Drehachse drehbar miteinander verbunden sind, dass beim Schließen des Klappverschlusses (1) der Dichtzapfen (6) des Klappdeckels (3) in den Entnahmedom (4) des Verschlussunterteils (2) eindringt und die Entnahmeöffnung (5) dichtend verschließt und sich das Verschlussunterteil (2) und der Klappdeckel (3) auf dem größten Teil ihres außerhalb des Bereichs des Scharniers (7) gelegenen Umfangs im Wesentlichen in einer Trennebene (9) berühren,
und wobei die Drehachse des Scharniers (7) gegenüber der Trennebene (9) in Richtung des Klappdeckels (3) hin versetzt ist,
**dadurch gekennzeichnet, dass**
das Verschlussunterteil (2) und der Klappdeckel (3) ferner über wenigstens ein Spannband (8) verbunden sind und das wenigstens eine Spannband (8) im geschlossenen Zustand des Klappverschlusses (1) wenigstens einen Übergangsbereich (10, 11) auf der äußeren Umfangsfläche des Klappverschlusses (1) zwischen der Trennebene (9) und einer in Umfangsrichtung gesehen äußeren Grenze des Scharniers (7) verdeckt.

2. Klappverschluss (1) gemäß Anspruch 1, **dadurch gekennzeichnet, dass** das Scharnier (7) ein Filmscharnier ist.

3. Klappverschluss (1) gemäß einem der vorhergehenden Ansprüche, **dadurch gekennzeichnet, dass** das Verschlussunterteil (2) und der Klappdeckel (3) über zwei Spannbänder (8) verbunden sind und jedes Spannband (8) im geschlossenen Zustand des Klappverschlusses (1) einen Übergangsbereich (10, 11) verdeckt.

4. Klappverschluss (1) gemäß einem der vorhergehenden Ansprüche, **dadurch gekennzeichnet, dass** wenigstens ein Übergangsbereich (10, 11) in Umfangsrichtung gesehen die Form einer Stufe oder einer geraden oder gekrümmten Schräge hat.

5. Klappverschluss (1) gemäß einem der vorhergehenden Ansprüche, **dadurch gekennzeichnet, dass** der Abstand von der Trennebene (9) zum Mittelpunkt der Drehachse des Scharniers (7) wenigstens 10 %, vorzugsweise wenigstens 20 %, weiter vorzugsweise wenigstens 25 % des Abstandes von der Trennebene (9) zur Entnahmeöffnung (5) beträgt.

6. Spritzgießmaschine mit Spritzgießformen oder Spritzgießformhälften zur Herstellung eines Klappverschlusses (1) gemäß einem der vorhergehenden Ansprüche, **dadurch gekennzeichnet, dass** die Spritzgießmaschine Mittel aufweist, um den Klappverschluss (1) nach dem Spritzgießen und vor dem vollständigen Entnehmen aus dem Spritzgießwerkzeug zu schließen.

7. Verfahren zur Herstellung eines Klappverschlusses (1) gemäß einem der Ansprüche 1 bis 5, **dadurch gekennzeichnet, dass** das Verfahren ein Spritzgießen aufweist.

8. Verfahren zur Herstellung eines Klappverschlusses (1) gemäß Anspruch 7, **dadurch gekennzeichnet, dass** der Klappverschluss (1) nach dem Spritzgießen und vor dem vollständigen Entnehmen geschlossen wird.

9. Verfahren zur Herstellung eines Klappverschlusses (1) gemäß Anspruch 7 oder 8, **dadurch gekennzeichnet, dass** das Verschlussunterteil (2) sich noch in seiner Spritzgießform oder in seiner Spritzgießformhälfte befindet, während die Spritzgießform oder Spritzgießformhälfte des Klappdeckels (3) bereits entfernt worden ist.

10. Verfahren zur Herstellung eines Klappverschlusses (1) gemäß einem der Ansprüche 7 bis 9, **dadurch gekennzeichnet, dass** der Klappdeckel (3) an das Verschlussunterteil (2) oder dass das Verschlussunterteil (2) an den Klappdeckel (3) angespritzt wird.

11. Verfahren zur Herstellung eines Klappverschlusses (1) gemäß Anspruch 10, **dadurch gekennzeichnet, dass** dasjenige Teil, an das das andere Teil angespritzt wird, vorher separat spritzgegossen wurde, und dass insbesondere eines der beiden Teile einstückig mit dem Scharnier (7) spritzgegossen wird.

12. Verfahren zur Herstellung eines Klappverschlusses (1) gemäß einem der Ansprüche 7 bis 11, **dadurch gekennzeichnet, dass** der Klappverschluss (1) aus einem Kunststoffmaterial spritzgegossen wird.

## Claims

1. Hinged closure (1) for a container, in particular for liquid, paste-like, or powdery products, with a lower closure part (2) to be mounted on a dispensing opening of the container and with a flip-top lid (3) at least partially covering the lower closure part (2) in the closed state of the hinged closure (1),
wherein the lower closure part (2) has on its outer surface facing away from the container a dispensing dome (4) protruding in the direction of the flip-top lid (3) in the closed state of the hinged closure (1), and the flip-top lid (3) has on its inner lid surface a sealing pin (6) protruding in the direction of the lower closure part (2) in the closed state of the hinged closure (1),
wherein the lower closure part (2) and the flip-top lid (3) are pivotally connected to each other by means of at least one hinge (7) about a pivot axis in such a way that the sealing pin (6) of the flip-top lid (3) penetrates the dispensing dome (4) of the lower closure part (2) when the hinged closure (1) is closed and locks the dispensing opening (5) in a sealing way, and the lower closure part (2) and the flip-top lid (3) are in contact to each other along the largest portion of their circumference that is located outside the area of the hinge (7) substantially in a parting plane (9), and wherein the pivot axis of the hinge (7) is offset with respect to the parting plane (9) in the direction of the flip-top lid (3),
**characterized in that**
the lower closure part (2) and the flip-top lid (3) are additionally connected via at least one tension band (8) and the at least one tension band (8) in the closed state of the hinged closure (1) conceals at least one transition area (10, 11) on the outer circumferential surface of the hinged closure (1) between the parting plane (9) and an outer border of the hinge (7) seen in the circumferential direction.

2. Hinged closure (1) according to claim 1, **characterized in that** the hinge (7) is a film hinge.

3. Hinged closure (1) according to one of the preceding claims, **characterized in that** the lower closure part (2) and the flip-top lid (3) are connected via two tension bands (8) and each tension band (8) conceals a transition area (10, 11) in the closed state of the hinged closure (1).

4. Hinged closure (1) according to one of the preceding claims, **characterized in that** at least one transition area (10, 11) has the form of a step or of a straight or curved slope seen in the circumferential direction.

5. Hinged closure (1) according to one of the preceding claims, **characterized in that** the distance from the parting plane (9) to the center of the pivot axis of the hinge (7) is at least 10 %, preferably at least 20 %, more preferably at least 25 % of the distance from the parting plane (9) to the dispensing opening (5).

6. Injection moulding machine with injection moulds or injection mould halves for manufacturing a hinged closure (1) according to one of the preceding claims, **characterized in that** the injection moulding machine has means for closing the hinged closure (1) after the injection moulding and before the complete removal from the injection moulding tool.

7. Method for manufacturing a hinged closure (1) according to one of claims 1 to 5, **characterized in that** the method includes injection moulding.

8. Method for manufacturing a hinged closure (1) according to claim 7, **characterized in that** the hinged closure (1) is closed after the injection moulding and before the complete removal.

9. Method for manufacturing a hinged closure (1) according to claim 7 or 8, **characterized in that** the lower closure part (2) still resides in its injection mould or in its injection mould half, whereas the injection mould or injection mould half of the flip-top lid (3) has already been removed.

10. Method for manufacturing a hinged closure (1) according to one of claims 7 to 9, **characterized in that** the flip-top lid (3) is injected to the lower closure part (2) or that the lower closure part (2) is injected to the flip-top lid (3).

11. Method for manufacturing a hinged closure (1) according to claim 10, **characterized in that** the component to which the other component is injected was separately injection moulded before and that in particular one of the two components is injection moulded as one piece with the hinge (7).

12. Method for manufacturing a hinged closure (1) according to one of claims 7 to 11, **characterized in that** the hinged closure (1) is injection moulded from a plastic material.

## Revendications

1. Système de fermeture rabattable (1) pour un contenant, en particulier pour des produits liquides, pâteux ou pulvérulents, comprenant une partie inférieure de système de fermeture (2) destinée à être montée sur une ouverture de retrait du contenant et comprenant un couvercle rabattable (3) recouvrant au moins en partie la partie inférieure de système de fermeture (2) dans l'état fermé du système de fermeture rabattable (1),
sachant que la partie inférieure de fermeture (2) présente, sur son côté extérieur opposé au contenant, un dôme de retrait (4) faisant saillie en direction du couvercle rabattable (3) dans l'état fermé du système de fermeture rabattable (1), pourvu d'une ouverture de retrait (5) et le couvercle rabattable (3) présente sur sa surface de couvercle intérieure un tourillon étanche (6) faisant saillie en direction de la partie inférieure de système de fermeture (2) dans l'état fermé du système de fermeture rabattable (1),
sachant que la partie inférieure de système de fermeture (2) et le couvercle rabattable (3) sont reliés l'un à l'autre au moyen d'au moins une charnière (7) de manière à pouvoir tourner autour d'un axe de rotation de telle manière que lors de la fermeture du système de fermeture rabattable (1), le tourillon étanche (6) du couvercle rabattable (3) pénètre dans le dôme de retrait (4) de la partie inférieure de système de fermeture (2) et ferme l'ouverture de retrait (5) tout en assurant l'étanchéité et la partie inférieure de système de fermeture (2) et le couvercle rabattable (3) sont en contact sensiblement dans un plan de séparation (9) sur la plus grande partie de leur périphérie placée à l'extérieur de la zone de la charnière (7),
et sachant que l'axe de rotation de la charnière (7) est décalé en direction du couvercle rabattable (3) par rapport au plan de séparation (9),
**caractérisé en ce que**
la partie inférieure de système de fermeture (2) et le couvercle rabattable (3) sont reliés en outre par l'intermédiaire d'au moins une bande de serrage (8), et l'au moins une bande de serrage (8) dissimule, dans l'état fermé du système de fermeture rabattable (1), au moins une zone de transition (10, 11) sur la surface périphérique extérieure du système de fermeture rabattable (1) entre le plan de séparation (9) et une limite, extérieure vue dans la direction périphérique, de la charnière (7).

2. Système de fermeture rabattable (1) selon la revendication 1, **caractérisé en ce que** la charnière (7) est une charnière-film.

3. Système de fermeture rabattable (1) selon l'une quelconque des revendications précédentes, **caractérisé en ce que** la partie inférieure de système de fermeture (2) et le couvercle rabattable (3) sont reliés par l'intermédiaire de deux bandes de serrage (8), et chaque bande de serrage (8) dissimule, dans l'état fermé du système de fermeture rabattable (1), une zone de transition (10, 11).

4. Système de fermeture rabattable (1) selon l'une quelconque des revendications précédentes, **caractérisé en ce qu'**au moins une zone de transition (10, 11) présente, vue dans la direction périphérique, la forme d'un palier ou d'un chanfrein rectiligne ou incurvé.

5. Système de fermeture rabattable (1) selon l'une quelconque des revendications précédentes, **caractérisé en ce que** la distance entre le plan de séparation (9) et le point central de l'axe de rotation de la charnière (7) est égale à au moins 10 %, de préférence à au moins 20 %, en outre de préférence à au moins 25 % de la distance entre le plan de séparation (9) et l'ouverture de retrait (5).

6. Machine de coulée par injection comprenant des moules de coulée par injection ou des moitiés de moule de coulée par injection servant à fabriquer un système de fermeture rabattable (1) selon l'une quelconque des revendications précédentes, **caractérisée en ce que** la machine de coulée par injection présente des moyens afin de fermer le système de fermeture rabattable (1) après la coulée par injection et avant le retrait complet hors de l'outil de coulée par injection.

7. Procédé servant à fabriquer un système de fermeture rabattable (1) selon l'une quelconque des revendications 1 à 5, **caractérisé en ce que** le procédé présente une coulée par injection.

8. Procédé servant à fabriquer un système de fermeture rabattable (1) selon la revendication 7, **caractérisé en ce que** le système de fermeture rabattable (1) est fermé après la coulée par injection et avant le retrait complet.

9. Procédé servant à fabriquer un système de fermeture rabattable (1) selon la revendication 7 ou 8, **caractérisé en ce que** la partie inférieure de système de fermeture (2) se trouve encore dans son moule de coulée par injection ou dans sa moitié de moule de coulée par injection, tandis que le moule de coulée par injection ou la moitié de moule de coulée par injection du couvercle rabattable (3) a déjà été retiré(e).

10. Procédé servant à fabriquer un système de fermeture rabattable (1) selon l'une quelconque des revendications 7 à 9, **caractérisé en ce que** le couvercle rabattable (3) est moulé par injection au niveau de la partie inférieure de système de fermeture (2), ou que la partie inférieure de système de fermeture (2) est moulée par injection au niveau du couvercle rabattable (3).

11. Procédé servant à fabriquer un système de fermeture rabattable (1) selon la revendication 10, **caractérisé en ce que** la partie, au niveau de laquelle précisément l'autre partie est moulée par injection, a été coulée par injection séparément au préalable, et qu'en particulier une des deux parties est coulée par injection d'un seul tenant avec la charnière (7).

12. Procédé servant à fabriquer un système de fermeture rabattable (1) selon l'une quelconque des revendications 7 à 11, **caractérisé en ce que** le système de fermeture rabattable (1) composé d'un matériau en plastique est coulé par injection.
